# NOUVEAU FASCICULE DE BREVET EUROPEEN

(11) **EP 2 150 740 B2**
(45) Date de publication et mention de la décision concernant l'opposition: **18.10.2017**
(45) Mention de la délivrance du brevet: 13.06.2012
(21) Numéro de dépôt: 07731294.0
(22) Date de dépôt: 13.04.2007
(51) Int. Cl.: F16L 58/04, F16L 15/00, F16L 58/18, E21B 17/042, C23C 4/12, C23C 4/02, C23C 22/76, C10M 169/04

(54) **ELEMENT FILETE TUBULAIRE MUNI D'UN REVETEMENT PROTECTEUR SEC**
RÖHRENFÖRMIGES GEWINDEGLIED MIT EINEM TROCKENEN SCHUTZÜBERZUG
TUBULAR THREADED MEMBER WITH DRY PROTECTION COATING

(43) Date de publication de la demande: 10.02.2010
(73) Titulaire: VALLOUREC OIL AND GAS FRANCE, 59620 Aulnoye-Aymeries (FR); Nippon Steel & Sumitomo Metal Corporation, Tokyo 100-8071 (JP)
(72) Inventeur: BORDET, Laurent, F-59000 Lille (FR); GILLOT, Laurent, F-59300 Valenciennes (FR); PINEL, Eliette, F-01600 Sainte-Euphémie (FR); GARD, Eric, F-69580 Sathonay Village (FR)
(74) Mandataire: Le Roy, Gwennhaël
(86) Numéro de dépôt international: PCT/FR2007/000627
(87) Numéro de publication internationale: WO 2008/125740

(56) Documents cités:
- EP-A- 1 211 451
- EP-A- 1 258 513
- EP-A- 1 411 288
- EP-A1- 1 378 698
- EP-A1- 1 378 699
- EP-A1- 1 548 346
- EP-A1- 1 736 697
- WO-A-96/20083
- WO-A2-2007/042231
- WO-A2-2008/139058
- US-A1- 2003 094 810
- US-A1- 2006 197 343
- US-A1- 2006 228 505
- US-B1- 6 635 341
- US-B1- 6 695 012
- Wikipedia webpage for "thermoplastics"
- Extrait du rapport CaseStudy Dopless and Wedge Series 500TM
- Extrait du rapport Dopless Report
- OLABISI O.: 'Handbook of Thermoplastics', 1997, MARCEL DEKKER, INC., NEW YORK pages 641-663 - 1017-1034
- MANG T. ET AL: 'Lubricants and Lubrication', vol. 2ND EDIT, 2007, WILEY-VCH VERLAG GMBH & CO.KGAA, WEINHEIM pages 88-118 - 694-714
- Lubricants and Lubrication, 2nd, completely revised and extended edition, from editor's website

## Description

L'invention concerne un élément fileté pour un joint fileté tubulaire.

### État de la technique

Les éléments filetés réalisés en extrémité d'un composant tubulaire (tube ou manchon) et utilisés dans les puits d'hydrocarbures doivent d'abord être protégés contre la corrosion durant le transport et le stockage sur site de forage et pour cela ils sont traditionnellement enduits de graisses ou d'huiles de protection en sortie d'atelier de fabrication.

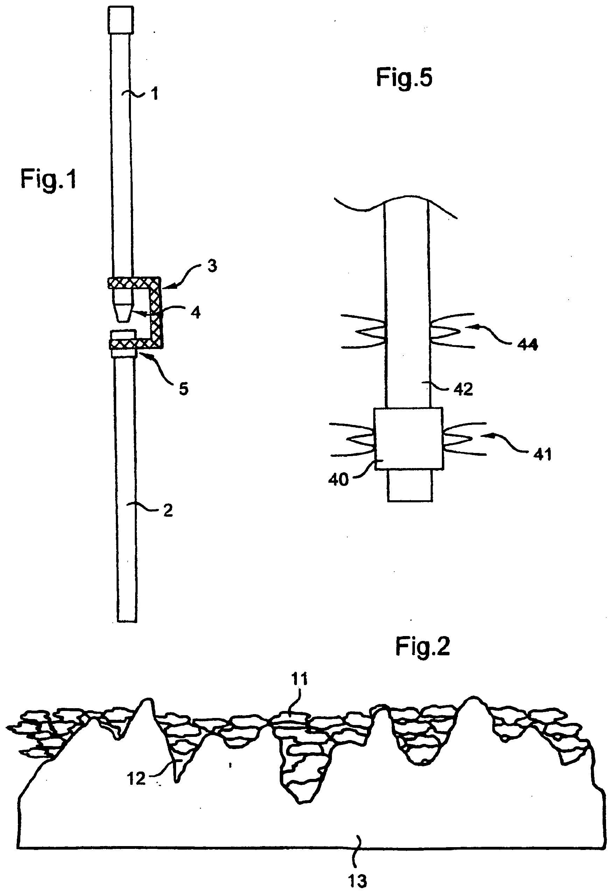

Sur puits ils peuvent avoir à subir plusieurs cycles de vissage et de dévissage. Les opérations de vissage se font verticalement sous forte charge axiale, par exemple sous le poids d'un tube de plusieurs mètres de longueur (typiquement 10 à 13 mètres de longueur) à assembler par le joint fileté verticalement, ce qui induit des risques de grippage, notamment des filetages. Cette charge peut en outre être localisée par un léger désalignement de l'axe des éléments filetés à assembler du fait que le tube à assembler est suspendu verticalement, ce qui augmente les risques de grippage. Ainsi la figure 1 représente l'assemblage par un joint fileté de deux tubes 1 et 2 de 10 à 13 mètres sur chantier avec un désalignement, une clé de vissage 3 étant utilisée pour visser la partie filetée mâle 4 du tube 1 dans la partie filetée femelle 5 du tube 2.

Pour protéger les parties sensibles telles que les filetages contre le grippage lors des opérations de vissage et de dévissage, les filetages sont traditionnellement débarrassés de la graisse de protection et enduits de graisses spéciales de vissage telles que la graisse selon API Bul. 5A2 ou RP5A3. L'utilisation de telles graisses chargées en métaux lourds et/ou toxiques tels que le plomb a, outre l'inconvénient de devoir faire une seconde enduction sur puits, celui de provoquer une pollution des puits et de l'environnement, l'excès de graisse étant éjecté des filetages lors du vissage.

US 6 933 264 propose de remplacer la double enduction par une simple enduction, réalisée en atelier de fabrication des éléments filetés, d'une couche mince d'un lubrifiant à consistance cireuse (dite semi-sèche) comprenant au moins un additif extrême pression à action chimique. Un tel revêtement semi-sec a cependant l'inconvénient de nécessiter une protection mécanique contre une pollution par des particules de poussières ou de sable durant le transport et le stockage.

US 4 414 247, US 4 630 849, US 6 027 145, US 6 679 526 B2, US 2004/0166341 A1 et WO 2004/033951 proposent de remplacer les graisses par divers revêtements protecteurs à l'état solide appliqués en atelier de fabrication des éléments filetés, comprenant une matrice solide adhérant au substrat dans laquelle sont dispersées des particules de lubrifiants solides, parmi lesquels est plus particulièrement cité le disulfure de molybdène MoS₂.

Ces revêtements, bien qu'apportant une amélioration par rapport aux graisses, ne sont pas encore entièrement satisfaisants. En particulier, on assiste fréquemment dans les conditions de chantiers de forage à un écaillage du revêtement et/ou à un arrachage de particules provenant de la surface frottante de celui-ci et qui sont dispersées dans l'environnement, ces incidents entraînant le retour du composant tubulaire en usine.

En outre ces revêtements nécessitent généralement un durcissement induit par une cuisson dans un four à environ 200°C durant plusieurs dizaines de minutes voire plus d'une heure, ce qui alourdit considérablement le cycle de réalisation du revêtement, lequel ne peut s'enchaîner avec l'usinage des filetages.

De plus ils ne protègent généralement pas ou pas suffisamment les éléments filetés de la corrosion de sorte que US 6 679 526 B2 et WO 2004/033951 prévoient l'application d'une couche séparée d'un matériau inhibiteur de corrosion (sel métallique d'acide carboxylique pour le premier document, résine époxy contenant des particules de zinc pour le second).

Un tel revêtement bicouche nécessite des cycles de réalisation encore plus lourds et ne résout pas plus les problèmes d'arrachement de particules.

Le but de l'invention est de remédier aux inconvénients des graisses et des revêtements secs ou semi-secs connus, et ainsi d'améliorer la situation de la tribologie et de la productivité de l'application du revêtement.

Optionnellement l'invention vient améliorer la situation en ce qui concerne la corrosion des éléments filetés.

Un vissage dans les conditions de travail, notamment dans les conditions de chantier, est un vissage qui s'effectue généralement en position verticale dans lequel (i) un premier élément fileté est maintenu vertical et fixe et (ii) un second élément fileté à visser sur le premier élément fileté, disposé ou solidarisé à l'extrémité basse d'un tube dont la longueur peut atteindre 13 mètres, est maintenu sensiblement verticalement au-dessus du premier élément fileté par un engin de levage, le second élément fileté étant ensuite vissé dans le premier par un dispositif adéquat tel qu'une clé de vissage motorisée. On entend de même par dévissage dans les conditions de chantier un dévissage des premier et second éléments filetés disposés verticalement donc supportant le poids d'un tube et sujets à un éventuel désalignement, le tube à dévisser étant suspendu à un engin de levage.

L'invention vise notamment un élément fileté selon la revendication 1.

Selon l'invention la matrice solide est lubrifiante et présente un comportement rhéologique du type plastique ou viscoplastique.

Selon l'invention la dispersion de particules d'au moins un lubrifiant solide comporte des particules de lubrifiant d'une seule des classes 1, 2, 3 ou 4.

Des caractéristiques optionnelles de l'invention, complémentaires ou de substitution, sont énoncées ci-après :
- la matrice présente un point de fusion compris entre 80 et 320°C ;
- la matrice comprend au moins un silicone tensio-actif ;
- la matrice comprend au moins un colorant ;
- la matrice comprend au moins un antioxydant ;
- les particules de lubrifiants solides sont choisies parmi des particules de lubrifiant de la classe 1, à l'exclusion de particules de graphite, et choisies parmi le nitrure de bore et l'oxyde de zinc ;
- les particules de lubrifiants solides sont choisies parmi des particules de lubrifiant de la classe 2, à l'exclusion de particules de bisulfure de molybdène, et choisies parmi le fluorure de graphite, les sulfures d'étain et les sulfures de bismuth ;
- les particules de lubrifiants solides comprennent des particules d'au moins un lubrifiant solide de classe 4 choisi parmi le polytétrafluoréthylène et le polyamide 11.

Le procédé peut comporter au moins certaines des particularités suivantes :
- on porte les constituants du revêtement à une température supérieure à celle de fusion de la matrice et on applique ensuite le revêtement par pulvérisation desdits constituants comprenant la matrice à l'état fondu ;
- on applique le revêtement par projection à travers une flamme d'une poudre formée par les constituants du revêtement ;
- on applique le revêtement par pulvérisation d'une émulsion aqueuse dans laquelle les constituants du revêtement sont dispersés ;
- l'élément fileté est porté à une température supérieure ou égale à 80°C ;
- l'élément fileté est à température ambiante ;
- ledit traitement de surface est choisi parmi les traitements mécaniques, les traitements chimiques et les dépôts non réactifs ;
- la surface à revêtir est une surface métallique et ledit traitement de surface est un traitement de conversion chimique de cette surface ;
- ledit traitement de conversion chimique est une phosphatation ;
- ledit traitement de surface est suivi d'un traitement d'imprégnation de la rugosité ou des porosités de la surface à revêtir (12) par des nanomatériaux (11) à action anticorrosion ;
- lesdits nanomatériaux sont des particules (11) d'oxyde de zinc ;
- lesdits nanomatériaux ont une taille médiane de particules de l'ordre de 200 nm ;
- lesdits nanomatériaux sont appliqués sous forme de dispersion.

Les caractéristiques et avantages de l'invention sont exposés plus en détail dans la description ci-après, avec référence aux dessins annexés.
La figure 1 représente schématiquement deux tubes prêts à être assemblés par vissage de leurs éléments filetés dans un puits d'hydrocarbures.
La figure 2 représente à échelle agrandie une partie de la surface du filetage d'un élément fileté, dont la porosité est imprégnée par des nanomatériaux dans le cadre du procédé selon l'invention.
Les figures 3 et 4 représentent schématiquement des dispositifs utilisables pour la mise en oeuvre du procédé selon l'invention.
La figure 5 représente schématiquement un dispositif pour évaluer le revêtement de l'invention par un essai de vissage et de dévissage.

L'invention porte un élément fileté pour un joint fileté tubulaire résistant au grippage. L'élément fileté est muni d'un filetage recouvert d'un revêtement mince à l'état solide non collant au toucher et adhérant au substrat qui résiste à de nombreuses opérations de vissage et de dévissage.

Le revêtement de l'élément fileté comprend une matrice solide et au moins un lubrifiant solide composé de particules dispersées dans la matrice solide.

L'invention repose sur une étude du comportement tribologique de certains matériaux et fait appel à certaines notions qui sont rappelées ci-après.

### Notions de base

### Effet de feuil ou de film de transfert des lubrifiants solides

Les lubrifiants solides en régime de lubrification à sec et hydrodynamique, lorsqu'ils sont dispersés dans un matériau fluide ou viscoplastique, ont tendance à se fixer sur les surfaces de manière stable en modifiant les caractéristiques de frottement de celles-ci. Ils sont transférés et liés à la surface par liaison chimique ce qui entraîne une grande résistance à l'usure et une amélioration des propriétés de frottement. Selon la nature des solides, cela confère aux surfaces une protection anti-usure, des propriétés de résistance et anti-usure aux pressions extrêmes générées par de fortes contraintes de charges en surface appelées contraintes de Hertz, et un faible coefficient de frottement dans un large spectre de charges et de vitesses de frottement. Ces propriétés de génération de film de transfert ou de feuil sont utilisées pour les types de frottement où les surfaces sont sollicitées de manière répétée, ainsi que cela se produit lors des vissages et dévissages des systèmes de joints filetés tubulaires.

### Troisième corps de frottement

Le troisième corps de frottement est la substance qui s'interpose entre deux surfaces en contact durant le frottement.

En l'absence de lubrifiant deux corps en frottement relatif et sous contrainte produisent un troisième corps formé des débris transformés chimiquement ou non de chacun des corps. Ce troisième corps définit une partie des propriétés de frottement par son comportement sous la contrainte appliquée, son mécanisme de transformation sous contrainte, sa capacité à migrer, à se fixer ou à s'éliminer.

Lorsqu'un lubrifiant liquide, fluide ou solide plastique, c'est à dire se déformant sous cisaillement de manière plastique avec écoulement de matière, est interposé entre les deux corps, le lubrifiant forme un film séparant les surfaces des deux corps et constitue en lui-même un troisième corps. Sa composition est modifiée en régime limite, c'est-à-dire lorsque les contraintes de frottement aboutissent à un contact des matériaux lubrifiés, avec production de solides se mélangeant au lubrifiant fluide ou plastique.

### Propriétés aux pressions extrêmes

Ce sont les propriétés de certains produits permettant aux surfaces subissant des contraintes de Hertz très élevées de résister à l'usure et de glisser avec de faibles coefficients de frottement.

### Contrainte de Hertz ou pression de Hertz

Les surfaces en contact sous contrainte de charge se déforment de manière élastique définissant une zone de contact d'une certaine surface. La charge appliquée divisée par cette surface définit la pression ou contrainte de Hertz. Lors de fortes contraintes de Hertz, les matériaux solides non plastiques peuvent subir des cisaillements internes réduisant leur durée de vie par fatigue du matériau alors que les matériaux solides plastiques subissent ce cisaillement sans dégradation structurale.

### Matrice

On désigne ainsi un système permettant de fixer ou de porter un principe actif à un endroit donné. Elle sert également d'agent de cohésion à un système hétérogène et peut avoir des fonctions complétant celles des principes actifs qu'elle lie ou porte.

La matrice solide de l'invention est notamment lubrifiante et présente un comportement rhéologique du type plastique ou viscoplastique.

### Synergie

Des corps ayant des propriétés de base peuvent se combiner en un corps complexe aux caractéristiques et comportements totalement différents. Dans le cas où ces comportements conduisent à des performances supérieures au cumul de celles des constituants, on parle de synergie.

### Viscosité, plasticité, viscoplasticité, comportement granulaire

Il existe des corps très déformables ou fluides qui subissent une déformation finie sous l'effet d'une pression hydrostatique, et un écoulement indéfini sous l'effet d'une contrainte de cisaillement même faible. Ce sont par exemple les huiles et graisses.

Il existe des corps peu déformables ou solides qui subissent une déformation finie quelle que soit la nature de la contrainte, au moins jusqu'à un certain seuil de contrainte. C'est le cas des systèmes thermodurcissables ayant une limite élastique au-delà de laquelle il y a dégradation structurale du matériau.

Il existe des matériaux (les plus courants) qui sont compris entre ces deux extrêmes (les matériaux à comportement élastique, plastique, visqueux, viscoplastique).

Le troisième corps généré ou présent lors d'un frottement doit ses propriétés lubrifiantes ou non lubrifiantes à son état physique, selon le tableau 1 ci-après.

Les matériaux utilisés dans la matrice selon l'invention appartiennent à la catégorie 1 du tableau 1.

**Tableau 1**

| Catégorie | 1 | 2 | 3 |
|---|---|---|---|
| état physique du troisième corps | Solide plastique | Solide granulaire | Fluide |
| Description du comportement | écoulement viscoplastique | état frictionnel-collisionnel | Comportement frictionnel-visqueux |
| Effet | Lubrifiant | Non lubrifiant | Lubrifiant |

### Polymères thermoplastiques et thermodurcissables

La matrice solide de l'invention comporte au moins un polymère thermoplastique, en l'occurence de 8 à 90% de polyéthylène homopolymère.

Le terme thermoplastique qualifie un polymère fusible susceptible d'être, de manière réversible, ramolli puis fondu par chauffage respectivement aux températures T_{G} et T_{F} (point de transition vitreuse et température de fusion) et solidifié par refroidissement. Les polymères thermoplastiques sont transformés sans réaction chimique. Les polymères thermoplastiques sont utilisés dans l'invention afin d'obtenir sous contrainte de frottement un écoulement visqueux tout en conservant de manière statique une structure solide sèche (non collante) au toucher et stable. Au contraire, généralement, les polymères thermodurcissables n'ont pas ou ont peu de comportement visqueux sous contrainte.

### Savon métallique

Ce terme recouvre les savons de métaux alcalins et alcalino-terreux et d'autres métaux. Ce sont des composés fusibles ayant des capacités d'écoulement entre des surfaces (catégorie 1 du tableau 1).

### Cire

Ce terme recouvre des substances fusibles à propriétés lubrifiantes d'origines diverses (minérale notamment issue de la distillation du pétrole, végétale, animale ou de synthèse) dont la consistance plus ou moins pâteuse ou dure et la température de fusion et le point de goutte peuvent varier dans d'importantes proportions selon leur nature.

### Inhibiteurs de corrosion

Ce sont des additifs conférant à un matériau liquide ou solide appliqué sur une surface la capacité de protéger cette surface de différents modes de corrosion. Ces inhibiteurs de corrosion fonctionnent selon divers mécanismes chimiques, électrochimiques ou physico-chimique.

### Lubrifiants solides

Un lubrifiant solide est un corps solide et stable qui en s'intercalant entre deux surfaces de frottement permet d'abaisser le coefficient de frottement et de réduire l'usure et l'endommagement des surfaces.

Ces corps peuvent être classés en différentes catégories définies par leur mécanisme de fonctionnement et leur structure. Ces catégories sont par exemple décrits dans les documents de cours intitulé "les lubrifiants solides" dispensé par Monsieur Eric Gard à l'École Nationale Supérieure des Pétroles et Moteurs (France).
- Classe 1 :: corps solides devant leurs propriétés lubrifiantes à leur structure cristalline, par exemple graphite, nitrure de bore BN, oxyde de zinc ZnO.
- Classe 2 :: corps solides devant leurs propriétés lubrifiantes d' une part à leur structure cristalline et d'autre part à un élément chimique réactif de leur composition, par exemple bisulfure de molybdène MoS₂, fluorure de graphite, sulfures d'étain, sulfures de bismuth.
- Classe 3 :: corps solides devant leurs propriétés lubrifiantes à leur réactivité chimique, par exemple certains composés chimiques de type thiosulfates (par exemple Desilube 88 commercialisé par Desilube Technology Inc.).
- Classe 4 :: corps solides devant leurs propriétés lubrifiantes à un comportement plastique ou viscoplastique sous contrainte de frottement, par exemple polytétrafluoréthylène PTFE, polyamides.

De manière à obtenir de bonnes performances en termes de frottement et de constitution de film de transfert lubrifiant solide, l'invention met en oeuvre des particules de lubrifiants solides appartenant à l'une des classes précédentes.

Les inventeurs ont préférentiellement mis en oeuvre comme lubrifiants solides des composés de classe 2 et notamment des composés peu utilisés jusqu'ici tels que les fluorures de graphite, les sulfures complexes d'étain ou de bismuth. Ces composés diffèrent, selon les inventeurs, des produits lubrifiants solides traditionnels tels que le graphite, le bisulfure de molybdène ou le bisulfure de tungstène par leur plus grande capacité de liaison avec les métaux et leurs performances aux pressions extrêmes largement plus élevées.

Les inventeurs ont notamment recherché des solutions ne mettant pas en oeuvre de graphite, susceptible de faciliter l'apparition de corrosion, ni de bisulfure de molybdène, ce composé étant connu pour être instable notamment en présence d'humidité et libérer de l'oxyde de soufre corrosif pour l'acier ou du sulfure d'hydrogène rendant éventuellement l'acier sensible à la rupture différée sous contrainte par l'hydrogène (sulfide stress cracking ou SSC).

### Fullerènes

Ce sont des matériaux moléculaires ayant une structure sous forme de tubes fermés ou ouverts ou de sphères fermées ou ouvertes, en monocouche ou en multicouches. Les fullerènes sphériques ont une taille de quelques dizaines de nm en monocouche et supérieure à environ 80 nm en multicouche. Ils agissent sur les surfaces en bloquant de manière stable les sites créés par les rugosité de surface et en bloquant les dégradations du type écaillage.

### Types de contraintes

L'invention prend en compte les différentes contraintes auxquelles sont soumis les joints filetés tubulaires lors de leur fonctionnement.

### Frottements à faibles et fortes vitesses, faibles et fortes contraintes de Hertz

Le système de frottement lors du vissage et du dévissage des joints filetés est rendu complexe par la grande variété de vitesses de frottement rencontrée. En effet les vitesses peuvent être relativement importantes au cours du vissage et quasi nulles en fin de vissage ou en début de dévissage.

D'autre part les contraintes de Hertz sont très importantes dans les mêmes périodes de frottement conduisant à des régimes limites. Les inventeurs ont donc cherché à définir un système répondant à ces contraintes.

Pour résoudre les problèmes dus aux contraintes cinétiques, les inventeurs ont mis au point une matrice dont les propriétés sont à caractéristique plastique conduisant à un écoulement visqueux sous contraintes et répondant à toutes les situations de vitesse rencontrées. L'utilisation de plusieurs constituants est nécessaire pour les systèmes les plus performants afin de les adapter à cette grande variété de cisaillements. Cette matrice permet de maintenir les autres éléments actifs en place et contribue à l'élaboration de feuils ou films de transfert stables.

Les résines thermoplastiques possédant généralement des caractéristiques plastiques ont été choisies et les inventeurs ont privilégié le polyéthylène parmi l'ensemble des polymères viscoplastiques existants, de préférence à d'autres polymères viscoplastiques tels que le polyamide 6, le polyamide 11 et le polypropylène, qui posent des problèmes d'application en raison de leur haute viscosité à l'état fondu. Parmi les qualités de polyéthylène, le choix s'est porté sur celles ayant des points de fusion supérieurs à 105°C.

Pour bloquer les débris issus des frottements sur la surface et ainsi éliminer les possibilités de pollution de l'environnement, il est prévu en outre des moyens de réagglomération de débris capables de réagglomérer les débris issus des frottements au niveau de la surface de contact des éléments filetés. Ces moyens de réagglomérations permettent de réagglomérer les débris aussitôt qu'ils sont formés.

Les inventeurs ont notamment trouvé que certains savons métalliques, certaines cires et certains polymères peuvent être utilisés comme moyens de réagglomération.

Les inventeurs ont notamment constaté expérimentalement qu'une amélioration des propriétés de réagglomération des débris et de la plasticité de la matrice est obtenue par l'adjonction de moyens de réagglomération de type savon métallique, parmi lesquels les savons de calcium, de bismuth et de zinc qui ont donné d'excellents résultats en nombre de vissage et dévissage dans les conditions de chantier décrites plus haut. Parmi ces savons, le stéarate de zinc a été sélectionné pour son intervention en synergie avec les inhibiteurs de corrosion étudiés ci-après.

L'incorporation dans la matrice de corps gras naturels tels que la cire de carnauba permet également d'optimiser les propriétés de réagglomération des débris lors des opérations de vissage-dévissage.

De manière à répondre dans les conditions quasi-statiques aux contraintes de lubrification limite avec conjonction de charges de frottement très élevées, les inventeurs ont élaboré un système d'additifs adéquat comprenant un lubrifiant solide constitué de particules dispersées dans une matrice solide. Les additifs EP (extrême pression) classiques par exemple à base de composés soufrés du genre décrit dans le document EP1313827) ne fonctionnent que lorsque les sollicitations en surface leur permettent de réagir, ce qui ne se produit que dans certains domaines" de charge et de vitesse de frottement. Les inventeurs ont préféré mettre en oeuvre des lubrifiants solides, capables de garantir un régime lubrifié même en condition quasi statique.

Les inventeurs ont en particulier utilisé un ou plusieurs lubrifiants solides en classe 2.

### Environnement hostile (humidité saline ou non)

En fonction des exigences de protection anticorrosion de surface, il peut être nécessaire d'incorporer dans la matrice des inhibiteurs de corrosion. Parmi ceux-ci les dérivés de sulfonates de calcium et plus particulièrement ceux provenant de l'association d'oxyde de calcium et de sulfonates de calcium dans un milieu constitué de cires, de résines pétrolières ou de paraffines tels que le produit commercialisé par la société LUBRIZOL sous la dénomination ALOX 606 se sont montrés particulièrement performants.

La résistance à la corrosion peut encore être améliorée en associant l'inhibiteur de corrosion sélectionné à des composés agissant selon d'autres mécanismes bloquant la corrosion- Comme indiqué plus haut, le stéarate de zinc en particulier montre des propriétés synergiques avec les inhibiteurs de corrosion tout en contribuant largement au comportement lubrifiant de la matrice.

Le test principal de la protection anticorrosion est l'essai au brouillard salin réalisé selon la norme ISO 9227 et évalué par l'indice Re selon ISO EN 2846-3 sur plaque traitée par phosphatation au manganèse (dépôt de 8 à 20 g/m² de phosphate).

### Utilisation en environnement protégé (contraintes de compatibilité avec l'environnement)

La composition de la matrice est prévue pour bloquer les débris issus des frottements sur la surface afin d'éliminer les possibilités de pollution de l'environnement. Grâce à la composition appropriée de la matrice, ces débris se réagglomèrent aussitôt qu'ils sont formés.

Afin de mettre en évidence cette propriété les inventeurs ont inclus dans les protocoles expérimentaux des procédures de mesure quantitative par pesée des débris générés lors du frottement. Ils ont ainsi pu constater l'efficacité des moyens de réagglomération de type savons métalliques et cires.

Toutefois, selon les compositions étudiées, une insuffisance de performance en termes de réagglomération a conduit à rechercher d'autres types de produit à fonction réagglomérante. C'est ainsi qu'ils ont considéré l'influence de polymères très visqueux tels que polyméthacrylates d'alkyle (PAMA), d'excellents résultats au test de réagglomération des débris étant obtenus avec un PAMA d'une viscosité cinématique de 850 mm²/s à 100°C commercialisé par la société ROHMAX sous la dénomination VISCOPLEX 6-950.

L'examen, après des cycles de vissage et de dévissage, de deux filetages munis d'un revêtement selon l'invention dont l'un seulement contient un PAMA montre qu'avec ce revêtement les débris produits par le frottement se sont agglomérés et incorporés sur la surface de frottement sans provoquer de pollution externe, tandis qu'avec l'autre revêtement les débris restent dispersés.

### Applicabilité du revêtement

Pour améliorer l'accroche et l'aspect du revêtement à température ambiante, il peut être nécessaire d'ajouter au moins un agent tensio-actif à la matrice.

Ainsi les inventeurs ont plus spécialement envisagé l'addition de 2 % ou moins de silicone tensio-actif, de préférence du polydiméthylsiloxane, ou du DC56 (commercialisé par la société DOW CORNING).

L'invention associe ainsi deux groupes de produits, avec utilisation systématique des interactions synergiques entre ceux-ci :
- Les constituants de la matrice.
- Un ou des lubrifiants solides d'une même classe.

Le procédé comporte une préparation de surface des éléments à lubrifier.

Des essais de vissage et de dévissage ont montré que pour obtenir l'établissement d'un film de transfert correct, il était nécessaire de modifier la surface à revêtir soit par un traitement mécanique tel qu'un sablage ou un grenaillage, soit par une modification physique ou chimique des surfaces au moyen d'un traitement réactif à base de dépôts minéraux cristallisés en surface, d'une attaque chimique par exemple par un acide, d'un traitement de phosphatation au zinc ou au manganèse ou d'une oxalatation conduisant à une couche de conversion chimique de la surface. Parmi ces traitements de surface, la phosphatation est préférée car elle permet d'obtenir une surface d'accrochage correcte conduisant à l'établissement d'un film de transfert résistant lors du frottement et très stable, ainsi qu'une protection anticorrosion de base.

Il peut par ailleurs être souhaitable de procéder à une préparation de surface complémentaire consistant notamment à imprégner la porosité de la surface par des nanomatériaux dont la taille leur permet de s'insérer dans les porosités. L'objectif de cette imprégnation est de bloquer et de saturer les sites créés par la porosité par un matériau à action passivante protégeant la surface contre la corrosion tout en conservant une bonne adhérence du revêtement.

La figure 2 montre schématiquement l'imprégnation de particules 11 dans des sites de porosité 12 d'un substrat métallique 13.

Les inventeurs ont constaté des améliorations de performance à l'essai au brouillard salin selon les normes précitées (augmentation de 20 % du temps d'apparition de la corrosion) en insérant des particules d'oxyde de zinc de taille nanométrique (200 nm en moyenne), appliquées en dispersion simple dans l'eau.

De manière à permettre une identification visuelle des surfaces traitées, on peut utiliser tous colorants organiques connus à des teneurs telles (1% par exemple) qu'ils ne dégradent pas les performances de frottement.

Pour préserver le revêtement de la dégradation par oxydation due par exemple à la chaleur, on peut ajouter un ou plusieurs antioxydants. Les composés polyphénoliques, les dérivés de naphtylamine et les phosphites organiques constituent les principales familles d'antioxydants. Les inventeurs ont choisi plus particulièrement une combinaison des produits IRGANOX® L150 (système d'antioxydants polyphénoliques et aminés) et IRGAFOS® 168 (phosphite de tris(2,4-di-tert-butylphényle)) de la société Ciba-Geigy.

Des modes d'application du revêtement permettent une facilité de mise en place industrielle. Différentes techniques sont utilisables à cet effet, celles qui apparaissent les plus appropriées étant décrites ci-après.

La technique de pulvérisation à l'état fondu consiste à maintenir le produit à haute température en phase liquide et à le pulvériser au moyen d'un pistolet de pulvérisation thermostaté. Le produit est chauffé entre 10 et 50°C au-dessus de sa température de fusion et pulvérisé sur une surface préchauffée à une température supérieure à la température de fusion afin d'obtenir un bon recouvrement de la surface.

En variante, la pulvérisation est effectuée sur un élément fileté non préchauffé (c'est-à-dire maintenu à température ambiante). La composition du revêtement est alors adaptée par addition d'une faible quantité d'agent tensio-actif, par exemple 2 % au maximum et préférentiellement 0,6 % à 1,0 % de silicone tensio-actif, de préférence du polydiméthylsiloxane ou du DC56 (commercialisé par la société DOW CORNING).

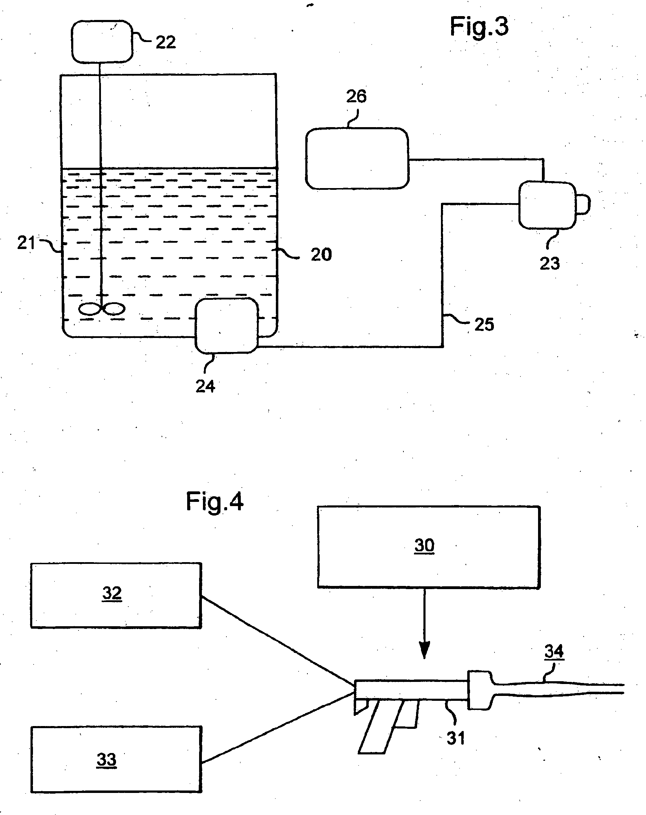

La figure 3 représente un exemple d'installation pour la mise en oeuvre du procédé. Le produit 20 est fondu dans une cuve 21, avec agitation par un agitateur à hélice 22, puis envoyé par une pompe à débit réglable 24, à travers un tuyau 25, à une tête de pulvérisation 23 également alimentée en air par un compresseur 26. Les composants 21 et 23 à 26 sont régulés en température.

Une autre technique est celle de l'application en émulsion, dans laquelle le produit est pulvérisé sous forme d'émulsion aqueuse. L'émulsion et le substrat peuvent être à température ambiante, un temps de séchage étant alors nécessaire. Ce temps de séchage peut être considérablement réduit en préchauffant le produit entre 60 et 80°C et/ou la surface entre 50 et 150°C.

La figure 4 illustre la technique de pulvérisation thermique ou pulvérisation au travers d'une flamme. Dans ce cas le produit 30 sous forme pulvérulente est projeté sur la surface à revêtir au moyen d'un pistolet 31 alimenté en air 32 et en gaz combustible 33. La poudre fond en traversant la flamme 34 et recouvre de manière homogène la cible.

### Exemples

On part d'un joint fileté de type VAM TOP HC de diamètre nominal 177,8 mm (7 in) et de masse linéique 43,15 kg/m (29 lb/ft) en acier faiblement allié (grade L80) selon fiche technique éditée par la division OCTG de la société Vallourec & Mannesmann Tubes.

L'élément fileté mâle a subi avant application du revêtement une phosphatation au zinc (poids de couche compris entre 4 et 20 g/m²) et l'élément fileté femelle une phosphatation au manganèse (poids de couche compris entre 8 et 20 g/m2). Les éléments filetés sont préchauffés à 130°C on y applique par pulvérisation thermique une couche de 35 µm d'épaisseur d'un produit maintenu fondu à 150°C, ayant la composition pondérale d'un des Exemples I à VI ci-après dans lesquels :
- le Polyéthylène est celui commercialisé par la société CLARIANT sous la dénomination PE 520,
- la Cire de carnauba est celle commercialisé par la société NOVEON sous la dénomination LANCO 1955SF,
- le Stéarate de zinc est celui commercialisé par la société PETER GREVEN sous la dénomination LIGASTAB ZN70,
- le PAMA (Polyméthacrylate d'alkyle) est celui commercialisé par la société ROHMAX sous la dénomination VISCOPLEX 6-950,
- le dérivé de sulfonate de calcium est celui commercialisé par la société LUBRIZOL sous la dénomination ALOX 606,
- le silicone (élément tensio-actif) est celui commercialisé par la société DOW CORNING sous la dénomination DC56 ; le silicone se présente sous forme d'émulsion,
- les antioxydants, d'une part un mélange d'amine et de phénol aromatiques et d'autre part du phényl-phosphate, sont ceux commercialisés par la société CIBA-GEIGY respectivement sous la dénomination IRGANOX L150 et IRGAFOS 168,
- le nitrure de bore est celui commercialisé par la société ESK sous la dénomination BN,
- l'oxyde de zinc est celui commercialisé par la société SILAR S.A sous la dénomination ZnO,
- le fluorure de graphite est celui commercialisé par la société ARC sous la dénomination CFx,
- le disulfure d'étain est celui commercialisé par la société CHEMETALL sous la dénomination SnS2,
- le polytetrafluoroethylène est celui commercialisé par la société SILAR S.A. sous la dénomination PTFE,
- le polyamide-11 est celui commercialisé par la société ARKEMA sous la dénomination RILSAN B.

### Exemple I: Lubrifiant solide de Classe 1

| | |
|---|---|
| PE 520 | 9,0 % |
| LANCO 1955SF | 15,0 % |
| LIGASTAB ZN70 | 15, 0 |
| VISCOPLEX 6-950 | 5,0 % |
| DC56 | 1,0 % |
| BN (Lubrifiant solide Classe 1) | 10,0 % |
| ALOX 606 | 44,5 % |
| IRGANOX L150 | 0,3 % |
| IRGAFOS 168 | 0,2 %. |

### Exemple II: Lubrifiant solide de Classe 2

| | |
|---|---|
| PE 520 | 9,0 % |
| LANCO 1955SF | 15,0 % |
| LIGASTAB ZN70 | 15,0 % |
| VISCOPLEX 6-950 | 5,0 % |
| DC56 | 1,0 % |
| CFx (Lubrifiant solide Classe 2) | 10,0 % |
| ALOX 606 | 44,5 % |
| IRGANOX L150 | 0,3 % |
| IRGAFOS 168 | 0,2 %. |

### Exemple III: Lubrifiant solide de Classe 4

| | |
|---|---|
| PE 520 | 9,0 % |
| LANCO 1955SF | 15,0 % |
| LIGASTAB ZN70 | 15,0 % |
| VISCOPLEX 6-950 | 5,0 % |
| DC56 | 1,0 % |
| PTFE (Lubrifiant solide Classe 4) | 10,0 % |
| ALOX 606 | 44,5 % |
| IRGANOX L150 | 0,3 % |
| IRGAFOS 168 | 0,2 % |

### Exemple IV: Conjonction Synergique de deux lubrifiants solides de Classe 1

| | |
|---|---|
| PE 520 | 9,0 % |
| LANCO 1955SF | 15,0 % |
| LIGASTAB ZN70 | 15,0 % |
| VISCOPLEX 6-950 | 5,0 % |
| DC56 | 1,0 % |
| BN (Lubrifiant solide Classe 1) | 2,0 % |
| ZnO (Lubrifiant solide Classe 1) | 8,0 % |
| ALOX 606 | 44,5 % |
| IRGANOX L150 | 0,3 % |
| IRGAFOS 168 | 0,2 %. |

### Exemple V: Conjonction Synergique de deux lubrifiants solides de Classe 2

| | |
|---|---|
| PE 520 | 9,0 % |
| LANCO 1955SF | 15,0 % |
| LIGASTAB ZN70 | 15,0 % |
| VISCOPLEX 6-950 | 5,0 % |
| DC56 | 1,0 % |
| CF (Lubrifiant solide Classe 2) | 2,0 % |
| SnS2 (Lubrifiant solide Classe 2) | 8, 0 % |
| ALOX 606 | 44,5 % |
| IRGANOX L150 | 0,3 % |
| IRGAFOS 168 | 0,2 %. |

### Exemple VI: Conjonction Synergique de deux lubrifiants solides de Classe 4

| | |
|---|---|
| PE 520 | 9,0 % |
| LANCO 1955SF | 15,0 % |
| LIGASTAB ZN70 | 15,0 % |
| VISCOPLEX 6-950 | 5,0 % |
| DC56 | 1,0 % |
| RILSAN B (Lubrifiant solide Classe 4) | 2,0 % |
| PTFE (Lubrifiant solide Classe 4) | 8,0 % |
| ALOX 606 | 44,5 % |
| IRGANOX L150 | 0,3 % |
| IRGAFOS 168 | 0,2 % |

Les exemples I à VI peuvent être vu comme des revêtements dont la composition pondérale est dans les gammes suivantes :

| | |
|---|---|
| matrice | 70 à 95 % |
| lubrifiants solides | 5 à 30 % |

En ce qui la concerne, la matrice peut être vue comme ayant une composition pondérale dans les gammes suivantes :

| | |
|---|---|
| polyéthylène homopolymère | 8 à 90 % |
| cire de carnauba | 5 à 30 % |
| stéarate de zinc | 5 à 30 % |
| dérivé de sulfonate de calcium | 0 à 50 % |
| polyméthacrylate d'alkyle | 0 à 15 % |
| colorant | 0 à 1 % |
| antioxydant | 0 à 1 % |
| silicone (élément tensio-actif) | 0 à 2 % |

Le silicone est de préférence du polydiméthylsiloxane ou du DC56 (commercialisé par la société DOW CORNING).

En pratique, l'épaisseur du revêtement est généralement comprise entre 10 µm et 50 µm.

Le revêtement peut être également appliqué sur une surface d'étanchéité apte à être en contact serrant étanche avec une surface d'étanchéité correspondante d'un second élément fileté après assemblage par vissage des deux éléments filetés.

Pour simuler des conditions de travail, on procède à un essai de vissage et de dévissage dans lequel le manchon 40 (figure 5) comportant l'élément femelle est maintenu verticalement dans le mors fixe 41 d'une clé de vissage et de l'élément mâle, formé à l'extrémité inférieure d'un tube court 42 dit "pup joint" disposé verticalement, est prévissé à la main dans l'élément femelle.

L'élément mâle est alors pris dans le mors mobile 44 de la clé de vissage et vissé dans l'élément femelle avec une vitesse de rotation initiale de 16 t/min, et diminution de la vitesse en phase finale jusqu'à annulation lorsque est atteint le couple nominal de vissage du joint fileté non revêtu, qui est de 20 100 N.m dans l'exemple.

Le dévissage est effectué de manière symétrique, c'est-à-dire une vitesse de rotation croissante.

Plusieurs cycles de vissage et de dévissage ont pu être réalisés dans ces conditions sans dégradation des parties constitutives des éléments filetés.

## Revendications

1. Élément fileté pour un joint fileté tubulaire résistant au grippage, comportant un filetage recouvert d'un revêtement mince à l'état solide non collant au toucher et adhérant au substrat qui comprend une matrice solide et, dans cette matrice, une dispersion de particules d'au moins un lubrifiant solide, **caractérisé en ce que** la matrice solide est lubrifiante et présente un comportement rhéologique du type plastique ou viscoplastique, et **en ce que** ladite dispersion de particules d'au moins un lubrifiant solide comporte des particules de lubrifiants d'une seule des- classes 1, 2, 3 ou 4, la composition pondérale de la matrice étant comme suit:
| | |
|---|---|
| polyéthylène homopolymère | 8 à 90 % |
| cire de carnauba | 5 à 30 % |
| stéarate de zinc | 5 à 30 % |
| Dérivé de sulfonate de calcium | 0 à 50 % |
| Polyméthacrylate d'alkyle | 0 à 15 % |
| Colorant | 0 à 1 % |
| Antioxydant | 0 à 1 % |
| silicone (élément tensio-actif) | 0 à 2 % |
et la composition pondérale du revêtement étant comme suit:
| | |
|---|---|
| matrice | 70 à 95 % |
| lubrifiants solides | 5 à 30 % |

2. Élément fileté selon la revendication 1, dans lequel les particules de lubrifiants solides sont choisies parmi des particules de lubrifiant de la classe 1, à l'exclusion de particules de graphite et sont choisies préférentiellement
parmi le nitrure de bore et l'oxyde de zinc.

3. Elément fileté selon la revendication 1, dans lequel les particules de lubrifiants solides sont choisies parmi des particules de lubrifiant de la classe 2, à l'exclusion de particules de bisulfure de molybdène et sont choisies préférentiellement
parmi le fluorure de graphite, les sulfures d'étain et les sulfures de bismuth.

4. Élément fileté selon la revendication 1, dans lequel les particules de lubrifiants solides comprennent des particules d'au moins un lubrifiant solide de classe 4 choisi parmi le polytétrafluoréthylène et le polyamide-11.

## Patentansprüche

1. Gewindeelement für einen festfressbeständigen rohrförmigen Gewindeverbinder, umfassend ein Gewinde, welches mit einer dünnen Schicht in festem Zustand beschichtet ist, die bei Berührung nicht kleberig ist und auf einem Substrat haftet, , welches eine feste Matrix und in dieser Matrix eine Dispersion bestehend aus Partikeln mindestens eines festen Schmiermittels umfasst, **dadurch gekennzeichnet, dass** die feste Matrix schmierfähig ist und ein plastisches oder viskoplastisches rheologisches Verhalten zeigt und diese Partikeldispersion mindestens eines festen Schmiermittels Schmierpartikel nur einer der Klassen 1, 2, 3 oder 4 umfasst, wobei die Matrix folgende Gewichtszusammensetzung aufweist:
| | |
|---|---|
| Polyethylen Homopolymer | 8 bis 90 % |
| Carnaubawachs | 5 bis 30 % |
| Zinkstereat | 5 bis 30 % |
| Calciumsulfonatderivat | 0 bis 50 % |
| Polyalkylmethacrylat | 0 bis 15 % |
| Farbstoff | 0 bis 1 % |
| Antixoxidans | 0 bis 1 % |
| Silikon (grenzflächenaktives Element) | 0 bis 2 % |
und die Beschichtung folgende Gewichtszusammensetzung lautet:
| | |
|---|---|
| Matrix | 70 bis 95 % |
| Feste Schmierstoffe | 5 bis 30 % |

2. Gewindeelement nach Anspruch 1, in welchem die schmierenden Feststoffpartikel aus den Schmierpartikeln der Klasse 1 mit Ausnahme der Graphitpartikel ausgewählt sind und vorzugsweise
aus Bornitrit und Zinkoxid.

3. Gewindeelement nach Anspruch 1, in welchem die schmierenden Feststoffpartikel aus den Schmierpartikeln der Klasse 2 mit Ausnahme der Molybdänbisulfidpartikel ausgewählt sind und vorzugsweise
aus Graphitfluorid, Zinnsulfiden und Bismuthsulfiden.

4. Gewindeelement nach Anspruch 1, in welchem die schmierenden Feststoffpartikel Partikel mindestens eines festen Schmierstoffes der Klasse 4 umfassen, welcher aus Polytetrafluorethylen und Polyamid-11 ausgewählt wird.

## Claims

1. A threaded element for a tubular threaded joint which is resistant to galling, comprising a threading covered with a thin coating in the solid state, not sticky to the touch and adhering to the substrate, which comprises a solid matrix and, in said matrix, a dispersion of particles of at least one solid lubricant, **characterised in that** the solid matrix is lubricating and presents a rheological behaviour of the plastic or viscoplastic type, and **in that** said dispersion of particles of at least one solid lubricant comprises particles of lubricant of a single one of classes 1, 2, 3 or 4, the composition by weight of the matrix is as follows:
| | |
|---|---|
| polyethylene homopolymer | 8 to 90% |
| carnauba wax | 5 to 30% |
| zinc stearate | 5 to 30% |
| derivative of calcium sulphonate | 0 to 50% |
| alkyl polymethacrylate | 0 to 15% |
| colouring agent | 0 to 1% |
| anti-oxidant | 0 to 1% |
| silicone (surface-active element) | 0 to 2% |
and the composition by weight of the coating is as follows:
| | |
|---|---|
| matrix | 70 to 95% |
| solid lubricants | 5 to 30% |

2. A threaded element according to claim 1 wherein the particles of solid lubricants are selected from particles of lubricant of class 1, excluding graphite particles, and preferably selected from boron nitride and zinc oxide.

3. A threaded element according to claim 1 wherein the particles of solid lubricants are selected from particles of lubricant of class 2 excluding particles of molybdenum disulphide and preferably selected from graphite fluoride, tin sulphides and bismuth sulphides.

4. A threaded element according to claim 1 wherein the particles of solid lubricants comprise particles of at least one solid lubricant of class 4 selected from polytetrafluoroethylene and polyamide-11.
